Europäisches Patentamt

European Patent Office

Office européen des brevets

(11) Publication number: **0 075 409**
**B1**

(12) **EUROPEAN PATENT SPECIFICATION**

(45) Date of publication of patent specification: 07.06.89

(51) Int. Cl.⁴: **B 62 K 25/08**

(21) Application number: **82304696.6**

(22) Date of filing: **08.09.82**

(54) **Road vehicle front wheel suspensions.**

(30) Priority: **19.09.81 JP 148029/81**

(43) Date of publication of application:
**30.03.83 Bulletin 83/13**

(45) Publication of the grant of the patent:
**07.06.89 Bulletin 89/23**

(84) Designated Contracting States:
**DE FR GB IT**

(56) References cited:
**FR-A-2 422 872**
**GB-A-1 006 265**
**GB-A-1 354 385**
**US-A-3 731 770**
**US-A-3 989 261**
**US-A-4 159 756**

(73) Proprietor: **HONDA GIKEN KOGYO KABUSHIKI
KAISHA**
**27-8, Jingumae, 6-chome**
**Shibuya-ku, Tokyo 150 (JP)**

(73) Proprietor: **SHOWA MANUFACTURING
COMPANY LIMITED**
**6-20, 2-chome**
**Yaesu Chuo-ku, Tokyo (JP)**

(72) Inventor: **Honma, Kenji**
**Honda-So 2nd Floor, 2-3-15, Minamidai
Kamifukuoka-shi Saitama (JP)**
Inventor: **Asami, Toshio**
**769-13, Yamada
Kawagoe-shi Saitama (JP)**
Inventor: **Baba, Masayuki**
**1-800-24, Nissin-cho
Omiya-sha Saitama (JP)**
Inventor: **Nakayama, Sumio**
**899, Kadoya Hamaoka-cho
Ogasa-gun Shizuoka (JP)**

(74) Representative: **MacFarlane, John Anthony
Christopher et al**
**HASELTINE LAKE & CO. Hazlitt House 28,
Southampton Buildings Chancery Lane
London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

This invention relates to front wheel suspensions of road vehicles such as motorcycles. It is particularly concerned with front wheel suspensions that include a telescopic hydraulic shock absorber mechanism providing an anti-dive function upon braking. Upon braking, displacement of the center of gravity, inertia force and so on act in a direction to contract the front fork and in the absence of anti-dive mechanism, and especially upon sudden hard braking, the front fork tends to come to assume its fully contracted position.

From United States Patent No. 3,898,261 it is known to provide, in a motorcycle, a front wheel suspension comprising two sets of inner and outer tubular members, each set consisting of a fork pipe axially slidable in a bottom case, a hydraulic system interposed between the tubular members of each set for providing a damping action, and a contraction restraining mechanism operable under vehicle braking to intercept a main communicating oil passage between the fork pipe and the bottom case to restrain axial contracting motion between the fork pipe and the bottom case; there being a bypass oil passage communicating the inner and outer tubular members. The contraction restraining mechanism includes a valve mechanism that in turn includes a piston having an opening communicating with the by-pass oil passage and a spring, the piston being brought into contact with the bottom case (in which the fork pipe is axially slidable) against the action of this spring upon braking so as to stop communication of an oil pressure generating chamber (defined by the fork pipe and the bottom case in which it slides) with the main oil passage, and in turn to communicate the oil passage generating chamber with the bypass oil passage through the opening. The contraction restraining mechanism, by intercepting, upon braking of the front wheel, the main oil communicating passage between each fork pipe and its associated bottom case, serves to restrain axially contracting motion between the fork pipe and the bottom case. There is thus provided a so-called "anti-dive" function. However, the damping force acting in a direction to contract the front fork when the contraction restraining mechanism is operative is caused to be substantially constant due to a reactive force against the braking effect, resulting in a difficulty in attaining an appropriate adjustment. In particular, in the suspension of U.S. 3,898,261 although a strong shock causes a valve member to move toward an open position so as to restore the damping operation, the influences of a large number of ordinary shocks, each weaker than the strong shock and exerted on the front wheel during braking, upon the suspension are not adjustable and this is disadvantageous because an appropriate degree of the anti-dive function depends significantly on the weight of the rider. Furthermore, the bypass oil passage is formed through the wall of the piston of the valve mechanism.

Further problems with the front wheel suspension of U.S. Patent No. 3,898,261 are that the suspension is difficult to manufacture and assemble, is bulky, and inspection and maintenance are difficult to carry out.

According to the present invention there is provided a road vehicle front wheel suspension comprising two sets of inner and outer tubular members, each set consisting of a fork pipe axially slidable in a bottom case;

an oil pressure generating chamber defined by the fork pipe and the bottom case;

a reservoir chamber communicating with the oil pressure generating chamber;

a main oil passage connected with the oil pressure generating chamber and the reservoir chamber for conducting oil from the oil pressure generating chamber into the reservoir chamber upon a contracting motion between the fork pipe and the bottom case; and

a contraction restraining mechanism including a casing provided on the lower outer periphery of the bottom case to define a portion of the main oil passage between the casing itself and the bottom case, a valve mechanism housed within the casing and operatively connected with a brake mechanism for intercepting the main oil passage upon braking of the vehicle and a bypass oil passage connected to the valve mechanism and effective to connect the oil pressure generating chamber with the reservoir chamber when the valve mechanism is in a main oil passage intercepting position, the bypass oil passage being contained in the casing and the valve mechanism including a piston having an opening communicating with the bypass oil passage, and a spring, the piston being brought into contact with the bottom case against the action of this spring upon braking so as to stop communication of the oil pressure generating chamber with the main oil passage and in turn to communicate the oil pressure generating chamber with the bypass oil passage through the opening;

characterised in that the casing is detachably attached through seals to the bottom case; in that the bypass oil passage is formed in the wall of the casing contiguous to the bottom case and extends in parallel to the portion of the main oil passage that is defined by the casing, the cross sectional area of the bypass oil passage being smaller than that of the main oil passage; in that an adjustable orifice means is fitted in the wall of the casing interposed in the bypass oil passage for adjusting a resistance to flow of oil in the bypass oil passage so as to adjust the contracting motion between the fork pipe and the bottom case upon braking of the vehicle; and in that a stopper mechanism for fixing the position of the orifice means and which includes an adjusting bolt and ball is provided in a stopper chamber that is in the wall of the casing. In this front wheel suspension, by the provision of the valve mechanism that includes the piston and the spring in association with the bypass oil passage, during braking operation the valve mechanism is brought into contact with the bottom case so as to stop direct communication between the oil pressure generating chamber and the main oil passage. In turn, indirect communication therebetween is effected through the bypass oil passage to prevent downward or sinking motion of the telescopic front fork. By the provision of the adjustable orifice means in the bypass oil passage, the damping effect on the front fork, in a direction of contraction thereof upon an anti-dive operation, can be appropriately adjusted. Since the casing of the contraction restraining mechanism is detachably attached on the lower part of the bottom case, and this casing contains therewithin the bypass oil passage, the adjustable orifice means and the stopper mechanism, the contraction restraining mechanism can be readily constituted by first producing an appropriate internal configuration in the casing to define the portion of the main oil passage and the bypass passage, and to contain the adjustable orifice means and the stopper mechanism, fitting the mechanical components of the orifice means and the stopper mechanism into the casing, setting the adjustable orifice means and then attaching the casing to the bottom case. Therefore, the present invention is advantageous over the prior art in terms of processability as well as productivity. A compact arrangement of the entire suspension is achieved, assisted by the parallel disposition of the bypass oil passage relative to the portion of the main oil passage defined by the casing. Also, by detaching the casing from the bottom case, inspection and maintenance can be carried out easily.

For a better understanding of the invention, and to show how the same may be carried into effect, reference will now be made, by way of example, to the accompanying drawings, in which:—

Figure 1 is a side view, partly in section, of a front wheel suspension of a motorcycle;

Figure 2 is a cross-sectional side view of a detail of the suspension of Figure 1, showing the condition adopted upon braking of the front wheel;

Figure 3 is a sectional side view of an upper check valve of the suspension of Figure 1;

Figure 4 is a transverse sectional view of the upper check valve;

Figure 5 is a view of a casing of the suspension of Figure 1 as viewed in the direction of arrow V in Figure 1;

Figure 6 is a side view of the casing;

Figure 7 is a sectional view taken along line VII—VII in Figure 6;

Figure 8 is a sectional view taken along line VIII—VIII in Figure 5;

Figure 9 is a sectional view taken along line IX—IX in Figure 8, showing components in a disassembled position;

Figure 10 is a sectional view taken along line X—X in Figure 9; and

Figure 11 is a view taken in the direction of XI—XI in Figure 6.

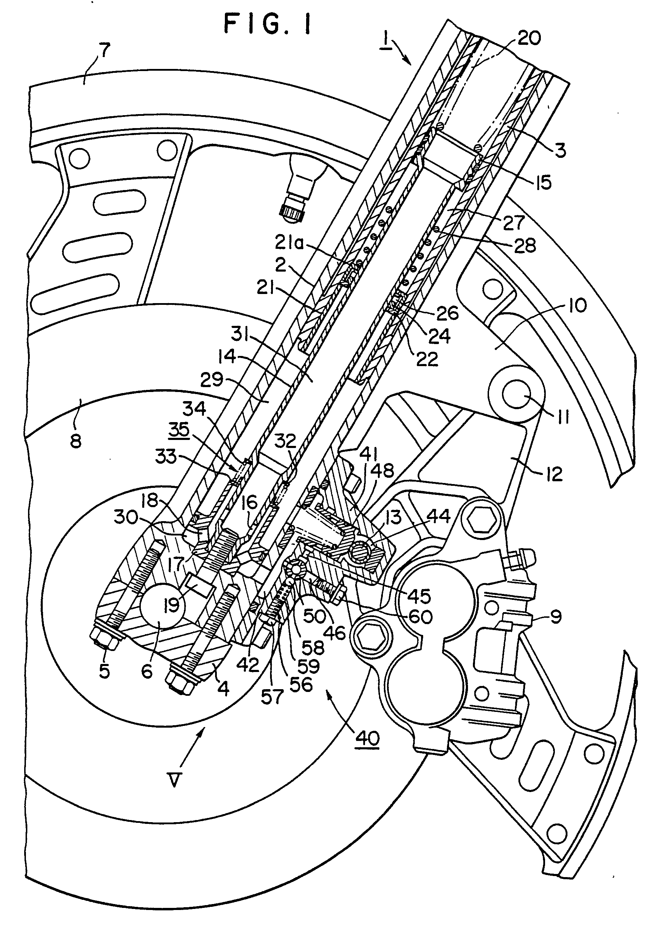

Referring first to Figure 1, there is illustrated a telescopic front fork 1 for a motor cycle which includes two bottom cases 2 (only one is shown) and two fork pipes 3 (only one is shown) fitted for axial sliding motion in respective bottom cases 2. A front axle 6 is held fast on the lower part of each bottom case 2 by means of an axle holder 4 and bolts 5. A front wheel 7 is mounted for rotation on the front wheel axle 6 via a bearing (not shown).

Annular brake disks 8 are mounted fast on opposite sides of a front wheel hub (not shown), and a brake caliper 9 is disposed to extend across the brake disks 8 over the outer diameters thereof. The brake caliper 9 is mounted on a caliper bracket 12 which is supported for pivotal motion about a shaft 11 mounted on a boss 10 that extends rearwardly from the bottom case 2.

On the inside of the lower end of each bottom case 2, a lower end of a seat pipe 14 is secured in fast and concentrical relationship with the bottom case 2 by means of a bolt 19 with a metal partition member 17 interposed between them. A piston 15 formed integrally at the opposite upper end of the seat pipe 14 is fitted in an inner circumferential surface of the fork pipe 3 of the telescopic front fork 1 in a sliding and oil-tight relationship therewith. A compression coil spring 20 is interposed between an upper end (not shown) of the fork pipe 3 and an upper end of the piston 15 within the fork pipe 3 so that, when there is no compressing force applied between the fork pipe 3 and the bottom case 2 of the telescopic front fork 1, the front fork 1 is held in an extended position due to the biasing force of the compressing coil spring 20.

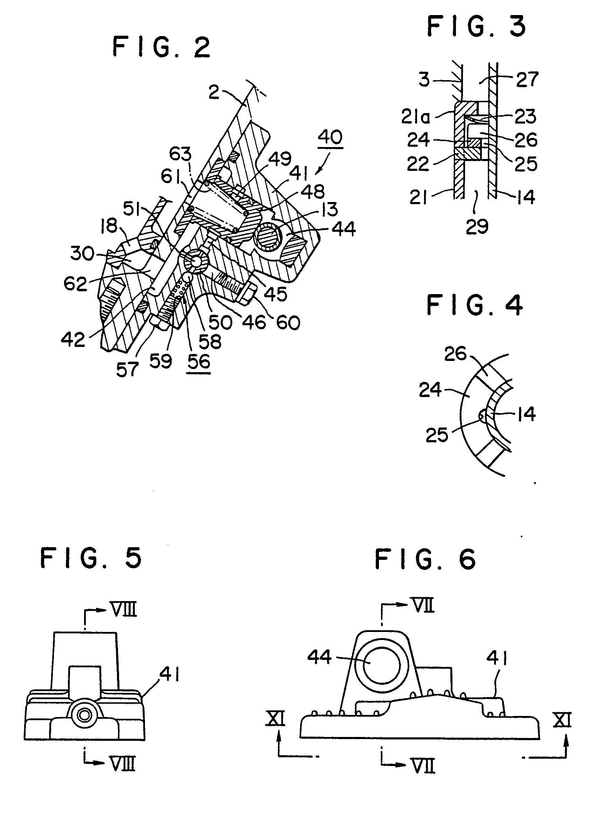

An inner tube 21, fitted on an inner circumferential surface of the lower end of the fork pipe 3 so as to be fast therewith, has disposed therein a valve seat 22 in the form of an annular disk having an inner diameter greater than the outer diameter of the seat pipe 14, and a spring plate 23 in the form of an annular disk. A check valve 24 placed on the top face of the valve seat 22 has an outer diameter smaller than the inner diameter of the inner tube 21 and an inner diameter substantially conforming to the outer diameter of the seat pipe 14. The check valve 24 has a plurality of notches 25 formed along its inner circumferential edge thereof as seen in Figure 4, each serving as an orifice, and also has a plurality of projections 26 formed on its top face along a circumference thereof. The check valve 24 is positioned such that the projections 26 thereof are engaged and held down by the inner projections of the spring plates 23, respectively, as shown in Figure 3.

The inner tube 21 has, at the top end thereof, an inwardly extending flange 21a (having an inner diameter greater than the outer diameter of the seat pipe 14), and a compression coil spring 28 having a predetermined height is placed on an upper face of the flange 21a of the inner tube 21 so that a damping action is obtained by the biasing force of this compression coil spring 28 when an extending force is applied between the fork pipe 3 and the bottom case 2 to move the check valve 24 near to the piston 15.

In particular, during a compressing stroke of the telescopic front fork 1, the check valve 24 is forced upwardly against the spring plate 23 by pressure oil within a lower oil pressure generating chamber 29 which is defined by the bottom case 2, the fork pipe 3, the seat pipe 14 and the partition member 17, and hence is disengaged from the valve seat 22 to allow the pressure oil to flow upwardly under relatively low flow resistance. On the contrary, during an extending stroke of the fork 1, pressure oil in another upper oil chamber 27 which is defined by the seat pipe 14, the piston 15 and the check valve 24 flows back into the oil pressure generating chamber 29 under relatively high flow resistance through orifices which are defined by the notches 25 of the check valve 24 and an outer wall of the seat pipe 14.

The oil pressure generating chamber 29 defined by the bottom case 2, the fork pipe 3, the seat pipe 14 and the partition member 17 is connected to a communicating chamber 30 defined by the bottom case 2 and the partition member 17 by way of a contraction restraining mechanism 40 including a main oil passage 42 as hereinafter described. The communicating chamber 30 is in turn connected to a reservoir chamber 31 defined by the seat pipe 14 and the fork pipe 3 by way of openings 18 in the partition member 17 and further openings 16 in the seat pipe 14. Thus, during a contracting stroke of the telescopic front fork 1, pressure oil in the oil pressure generating chamber 29 flows into the reservoir chamber 31 by way of the communicating chamber 30 after its pressure has been reduced due to predetermined flow resistance provided by the contraction restraining mechanism 40. Thus, both the urging force of the compression coil spring 20 interposed between the piston 15 and the fork pipe 3 and the flow resistance of the contraction restraining mechanism 40, act to damp shocks and vibrations of the motorcycle during running.

A check valve mechanism 35 is additionally provided on the top end of the partition member 17. This mechanism 35 includes a metal spring seat member 32 fitted on and secured to the seat pipe 14, a slidable member 33, and a compression coil spring 34 interposed between the spring seat member 32 and the slidable member 33. Thus, pressure oil in the reservoir chamber 31 is allowed to flow back into the oil pressure generating chamber 29 under relatively low flow resistance due to the check valve mechanism 35.

The contraction restraining mechanism 40 is disposed rearwardly of the bottom case 2, below the brake caliper bracket supporting boss 10, and includes a casing 41, an anti-dive piston 48 fitted in an oil-tight and sliding relationship in a cylinder chamber 43 in the casing 41 and normally urged in a direction away from the bottom case 2 by a spring 63, a rotatable adjusting orifice bolt 50 fitted in a bypass passage 45 which has one end communicated with an opening 49 of the piston 48, and a stopper mechanism 56 for fixture of the orifice bolt 50. As can be seen from Figures 1 and 2, the casing 41 is detachably attached through seals to the bottom case 2.

As also seen from Figures 5 to 8 and 11, the casing 41 has formed therein; (i) a main passage 42 which connects an opening 61 facing the oil pressure generating chamber 29 within the bottom case 2 to another opening 62 facing the communicating chamber 30; (ii) the aforementioned cylinder chamber 43 which is opposed to the opening (61); (iii) a shaft receiving hole 44 which communicates with the top of the cylinder chamber 43 and has a shaft 13 loosely fitted therein which is mounted on the caliper bracket (21); (iv) the bypass passage 45 which communicates the opening 49 of the piston 48 with the main passage 42, which extends in parallel to the main passage 42, and which has a cross sectional area smaller than that of the chamber 30 and the passage 42, this passage 45 being formed in the wall of the casing 41 contiguous to the bottom case 2; (v) a drain bolt hole 46 which communicates with the bypass passage 45 (a drain bolt 60 being screwed into the drain bolt hole 46); and (vi) in the wall of the casing 41, a stopper chamber 47 which contains therein the stopper mechanism 56 for mixture of the orifice bolt 50.

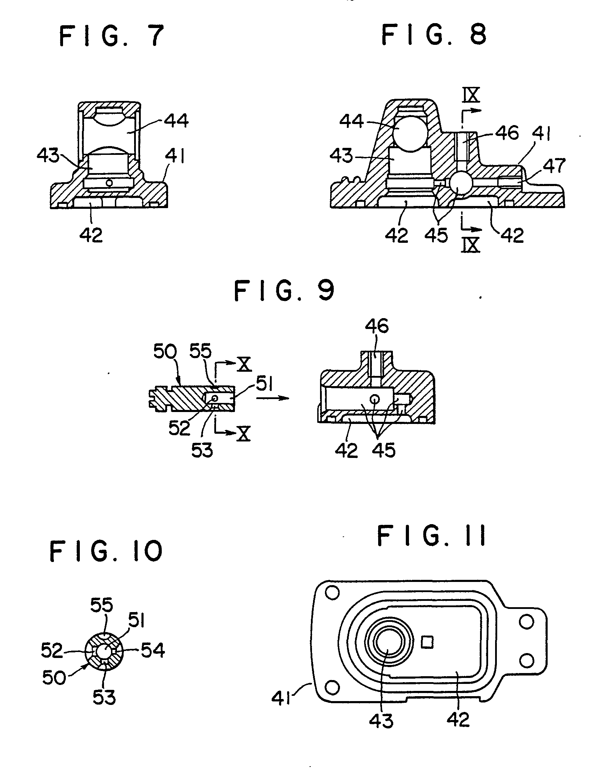

As seen in Figures 9 and 10, the rotatable adjusting orifice bolt 50, which is fitted in the wall of the casing 41, has formed therein a centre passage 51, radially extending communicating passages 52, 53 and 54 of different diameters which are disposed in an angularly spaced relationship of 90° from each other and communicate with the centre passage 51, and a recess 55 which has no communication with the centre passage 51 and which is opposite the passage 53 and hence is spaced 90° from each of the passages 52 and 54.

As seen from Figures 1 and 2, the stopper mechanism 56 for fixture of the orifice bolt 50 includes an adjusting bolt 57 for backward and forward adjustment, an engaging member in the form of a ball 58 disposed for engagement with the communicating passages 52, 53, 54 and the recess 55, and a compression coil spring 59 interposed between the adjusting bolt 57 and the ball 58.

According to the above described structure, if an upward impact force acts upon the front wheel 7 during normal running in which the front brake caliper 9 is held inoperative and hence no braking force is applied to the front wheel 7, pressure oil in the oil pressure generating chamber 29 is caused to pass through the opening 61, the main passage 42, the opening 62, the communicating chamber 30 and the openings 18, 16 to flow into the reservoir chamber 31 whereupon the upward shock which has acted upon the front wheel 7 is damped by the biasing force of the compression coil spring 20 interposed between the fork pipe 3 and the piston 15 and also by the flow resistance of the just described flow path of the oil.

If a downward force acts upon the front wheel 7 while no braking force is applied thereto, then the telescopic front fork 1 can extend itself rapidly since the anti-dive piston 48 (which in co-operation with the opposing wall of the bottom case 2 constitutes a valve mechanism interposed in the oil passage 42) is spaced from the bottom case 2 by the biassing force of the coil spring 63 and also pressure oil in the reservoir chamber 31 takes a path of low flow resistance, flowing from the openings 16 into the oil pressure generating chamber 29 by way of the check valve 35.

On the other hand, if the front brake caliper 9 is operated so that a braking force is applied to the front wheel 7, a counter clockwise force about the axle 6 as viewed in Figure 1 acts upon the caliper bracket 12 through the caliper 9 whereupon the anti-dive piston 48 is pushed by the shaft 13 on the caliper bracket 12 into abutment with the bottom case 2 against the biassing force of the coil spring 63 to intercept the main passage 42. In this condition, pressure oil in the oil pressure generating chamber 29 which is acted upon by a force.

## Claims

1. A road vehicle front wheel suspension comprising two sets of inner and outer tubular members, each set consisting of a fork pipe (3) axially slidable in a bottom case (2);

an oil pressure generating chamber (29) defined by the fork pipe and the bottom case (2);

a reservoir chamber (31) communicating with the oil pressure generating chamber (29);

a main oil passage (42/30) connected with the oil pressure generating chamber (29) and the reservoir chamber (31) for conducting oil from the oil pressure generating chamber (29) into the reservoir chamber (31) upon a contracting motion between the fork pipe (3) and the bottom case (2); and

a contraction restraining mechanism (40) including a casing (41) provided on the lower outer periphery of the bottom case (2) to define a portion (42) of the main oil passage (42/30) between the casing itself and the bottom case (2), a valve mechanism housed within the casing (41) and operatively connected with a brake mechanism (8/9) for intercepting the main oil passage (42/30) upon braking of the vehicle and a bypass oil passage (45) connected to the valve mechanism and effective to connect the oil pressure generating chamber (29) and the reservoir chamber (31) when the valve mechanism is in a main oil passage intercepting position, the bypass oil passage (45) being contained in the casing (41) and the valve mechanism including a piston (48) having an opening (49) communicating with the bypass oil passage (45), and a spring (63), the piston (48) being brought into contact with the bottom case (2) against the action of this spring (63) upon braking so as to stop communication of the oil pressure generating chamber (29) with the main oil passage (42/30) and in turn to communicate the oil pressure generating chamber (29) with the bypass oil passage (45) through the opening (49); characterised in that the casing (41) is detachably attached through seals to the bottom case (2); in that the bypass oil passage (45) is formed in the wall of the casing (41) contiguous to the bottom case (2) and extends in parallel to the portion (42) of the main oil passage (42/30) that is defined by the casing (41), the cross sectional area of the bypass oil passage (45) being smaller than that of the main oil passage (42/30); in that an adjustable orifice means (50—54) is fitted in the wall of the casing (41) interposed in the bypass oil passage (45) for adjusting a resistance to flow of oil in the bypass oil passage (45) so as to adjust the contracting motion between the fork pipe (3) and the bottom case (2) upon braking of the vehicle; and in that a stopper mechanism (56) for fixing the position of the orifice means (50—54) and which includes an adjusting bolt (57) and a ball (58) is provided in a stopper chamber (47) that is in the wall of the casing (41).

2. A front wheel suspension as claimed in claim 1, wherein the orifice means (50—54) is adapted for stepwise adjustment.

3. A front wheel suspension as claimed in claim 2, wherein the orifice means includes a rotatable member (50) having a plurality of selectively usable orifice holes (52, 53, 54) formed therein which provide different levels of fluids flow resistance; and wherein the stopper mechanism (56) is operable selectively to stop the rotatable member (50) at a selected one of a predetermined plurality of rotational positions.

4. A front wheel suspension as claimed in claim 3, wherein the rotatable member (50) is a hollow tube which has the orifice holes (52, 53, 54) extending in radial directions therein.

5. A front wheel suspension as claimed in claim 3 or 4, wherein the orifice holes (52, 53, 54) have different diameters from each other.

6. A front wheel suspension as claimed in claim 3, 4 or 5, wherein the orifice holes (52, 53, 54) are disposed along a same circumference in an angularly spaced relationship at spacings of substantially 90 degrees from each other.

7. A front wheel suspension as claimed in claim 3, 4, 5 or 6, wherein there are three of the orifice holes (52, 53, 54).

8. A front wheel suspension as claimed in any one of claims 3 to 7, wherein the ball (58) of the stopper mechanism (56) is engaged with the rotatable member (50) when pressed toward the rotatable member; wherein the adjusting bolt (57) is mounted for backward and forward adjustment; and wherein a resilient member (59) is interposed between the bolt (57) and the ball (58).

9. A front wheel suspension as claimed in claim 8, wherein the ball (58) is disposed for engagement with the orifice holes (52, 53, 54).

10. A front wheel suspension as claimed in claim 9, wherein the rotatable member (50) also has a recess formed therein which is disposed for engagement with the ball (58).

## Patentansprüche

1. Vorderradaufhängung für ein Straßenfahrzeug mit zwei Sätzen aus einem Innenrohr und einem Außenrohr und einem innerhalb eines Grundgehäuses (2) axial verschiebbaren Gabelrohr (3) in jedem Satz,

einer vom Gabelrohr und dem Grundgehäuse (2) gebildeten öldruckerzeugenden Öldruckkammer (29),

einer mit der Öldruckkammer (29) in Verbindung stehenden Speicherkammer (31),

einem mit der Öldruckkammer (29) und der Speicherkammer (31) in Verbindung stehenden und bei einer Einschubbewegung zwischen Gabelrohr (3) und Grundgehäuse (2) Öl aus der Öldruckkammer (29) in die Speicherkammer (31) leitenden Ölhauptkanal (42/30) und

einer die Einschubbewegung hemmenden Hemmeinrichtung (40), welche ein am unteren Außenumfang des Grundgehäuses (2) vorgesehenes und einen Teil (42) des Ölhauptkanals (42/30) bildendes Gehäuse (41) zum Ausbilden dieses Ölhauptkanals zwischen dem Gehäuse selbst und dem Grundgehäuse (2), einen innerhalb des Gehäuses (41) befindlichen und mit einer Bremseinrichtung (8/9) zwecks Unterbindens des Ölhauptkanals (42/30) beim Bremsen des Fahrzeugs betrieblich verbundenen Ventilmechanismus mit an ihn angeschlossenem Ölnebenschlußkanal (45) zum Verbinden den Öldruckkammer (29) mit der Speicherkammer (31) bei in den Ölhauptkanal unterbindender Stellung befindlichem Ventilmechanismus, wobei der Ölnebenschlußkanal (45) sich im Gehäuse (41) befindet und der Ventilmechanismus einen eine mit dem Ölnebenschlußkanal (45) in Verbindung stehende Öffnung (49) aufweisenden Kolben (48) besitzt, und eine Feder (63) aufweist, wobei der Kolben (48) beim Bremsen gegen die Kraft dieser Feder (63) in solcher Weise mit dem Grundgehäuse (2) in Berührung gebracht wird, daß die Verbindung der Öldruckkammer (29) mit dem Ölhauptkanal (42/30) unterbrochen und auch die Öldruckkammer (29) mit dem Ölnebenschlußkanal (45) über die Öffnung (49) verbunden wird,

dadurch gekennzeichnet, daß das Gehäuse (41) mittels Dichtungen abnehmbar am Grundgehäuse (2) befestigt ist, daß der Ölnebenschlußkanal (45) in der Wandung des Gehäuses (41) angrenzend an das Grundgehäuse (2) ausgebildet ist und sich parallel zum vom Gehäuse (41) definierten Teil (42) des Ölhauptkanals (42/30) erstreckt, wobei die Querschnittsfläche des Ölnebenschlußkanals (45) kleiner ist als jene des Ölhauptkanals (42/30), daß zwecks Einstellung eines Strömungswiderstandes für Öl in der Ölnebenschlußleitung (45) und damit Einstellung der Einschubbewegung zwischen Gabelrohr (3) und Grundgehäuse (2) beim Abbremsen des Fahrzeugs in der Wandung des Gehäuses (41) eingesetzt und in die Ölnebenschlußleitung (45) eingeschaltet eine einstellbare Durchflußbemessungseinrichtung (50—54) vorgesehen ist und daß zwecks Festlegens der Stellung der Durchflußbemessungseinrichtung (50—54) eine einen Einstellbolzen (57) und eine Kugel (58) aufweisende Feststelleinrichtung (56) in einer in der Wandung des Gehäuses (41) vorgesehenen Feststellkammer (47) vorgesehen ist.

2. Vorderradaufhängung nach Anspruch 1, worin die Durchflußbemessungseinrichtung (50—54) für stufenweise Verstellung ausgebildet ist.

3. Vorderradaufhängung nach Anspruch 2, worin die Durchflußbemessungseinrichtung einen drehbaren Teil (50) mit mehreren darin ausgebildeten und wahlweise verwendbaren Durchflußöffnungen (52, 53, 54) zum Erstellen verschieden großer Strömungswiderstände aufweist und worin die Feststelleinrichtung (56) so bedienbar ist, daß der drehbare Teil (50) wahlweise an einer von einer Vielzahl von vorbestimmten Verdrehstellungen angehalten wird.

4. Vorderradaufhängung nach Anspruch 3, worin der drehbare Teil (50) ein Hohlrohr ist, in welchem sich die Durchflußöffnungen (52, 53, 54) in radialen Richtungen erstrecken.

5. Vorderradaufhängung nach Anspruch 3 oder 4, worin die Durchflußöffnungen (52, 53, 54) voneinander verschiedene Durchmesser aufweisen.

6. Vorderradaufhängung nach Anspruch 2, 4, oder 5, worin die Durchflußöffnungen (52, 53, 54) entlang ein und desselben Umfanges mit einem Widerabstand von im wesentlichen 90° voneinander angeordnet sind.

7. Vorderradaufhängung nach Anspruch 3, 4, 5 oder 6, worin drei solcher Durchflußöffnungen (52, 53, 54) vorgesehen sind.

8. Vorderradaufhängung nach irgendeinem der Ansprüche 3 bis 7, worin die Kugel (58) der Feststelleinrichtung (56) mit dem drehbaren Teil (50) beim Pressen gegen den drehbaren Teil in Berührung steht, worin der Einstellbolzen (57) für eine Einstellung in Rückwärtsrichtung und Vorwärtsrichtung montiert ist und worin ein elastisches Glied (59) zwischen den Bolzen (57) und die Kugel (58) eingeschaltet ist.

9. Vorderradaufhängung nach Anspruch 8, worin die Kugel (58) für ein Eingreifen in die Durchflußöffnungen (52, 53, 54) angeordnet ist.

10. Vorderradaufhängung nach Anspruch 9, worin der drehbare Teil (50) weiters eine darin ausgebildete Ausnehmung aufweist, welche für ein Zusammenwirken mit der Kugel (58) angeordnet ist.

**Revendications**

1. Une suspension pour roue avant de véhicule routier comprenant deux ensembles d'organes tubulaires intérieur et extérieur, chaque ensemble consistant en un tube de la fourche (3) pouvant coulisser axialement dans un boîtier de base (2);

une chambre de génération de pression d'huile (29) définie par le tube de la fourche et le boîtier de base (2);

une chambre-réservoir (31) communiquant avec la chambre de génération de pression d'huile (29);

un conduit d'huile principal (42/30) relié à la chambre de génération de pression d'huile (29) et à la chambre-réservoir (31) pour amener l'huile de la chambre de génération de pression d'huile (29) à la chambre-réservoir (31) lors d'un mouvement de contraction entre le tube de la fourche (3) et le boîtier de base (2); et

un mécanisme pour réduire la contraction (40) incluant un carter (41) situé sur la périphérie extérieure inférieure du boîtier de base (2) pour définir une partie (42) du conduit d'huile principal (42/30) entre la carter lui-même et le boîtier de base (2), un mécanisme de valve logé à l'intérieur du boîtier (41) et relié de façon opérationnelle à un mécanisme de freinage (8/9) pour intercepter le conduit d'huile principal (42/30) lors du freinage du véhicule et un conduit d'huile parallèle (45) relié au mécanisme de valve et pouvant relier la chambre de génération de pression d'huile (29) à la chambre-réservoir (31) lorsque le mécanisme de valve est dans une position d'interception du conduit d'huile principal, le conduit d'huile parallèle (45) étant contenu dans le carter (41) et le mécanisme de valve incluant un piston (48) présentant une ouverture (49) communiquant avec le conduit d'huile parallèle (45), et un ressort (63), le piston (48) étant amené en contact avec le boîtier de base (2) sous l'action de ce ressort (63) lors d'un freinage de façon à arrêter la communication entre la chambre de génération de pression d'huile (29) et le conduit d'huile principal (42/30) et à permettre à son tour la communication entre la chambre de génération de pression d'huile (29) et le conduit d'huile parallèle (45) par l'ouverture (49);

caractérisé en ce que le carter (41) est fixé au boîtier de base (2) par des joints et peut être enlevé; en ce que le conduit d'huile parallèle (45) est formé dans la paroi du carter (41) contiguë au boîtier de base (2) et s'étend parallèlement à la partie (42) du conduit d'huile principal (42/30) définie par le carter (41), la surface de section du conduit d'huile parallèle (45) étant plus petite que celle du conduit d'huile principal (42/30); en ce qu'un moyen d'orifice réglable (50—54) est placé dans la paroi du carter (41) intercalé dans le conduit d'huile parallèle (45) pour régler une résistance au flux d'huile dans le conduit d'huile principal (45) de façon à régler le mouvement de contraction entre le tube de la fourche (3) et le boîtier de base (2) lorsque le véhicule freine; et en ce qu'un mécanisme d'arrêt (56) comprenant un boulon de réglage (57) et une bille (58) est placé dans une chambre d'arrêt (47) dans la paroi du boîtier (41) pour fixer la position du moyen d'orifice (50—54).

2. Une suspension pour roue avant selon la revendication 1, dans laquelle le moyen d'orifice (50—54) est adapté pour un réglage par paliers.

3. Une suspension pour roue avant selon la revendication 2, dans laquelle le moyen d'orifice inclut un organe rotatif (50) présentant une pluralité de trous d'orifices utilisables de façon sélective (52, 53, 54) qui fournissent différents niveaux de résistance au flux de fluides; et dans laquelle le mécanisme d'arrêt (56) peut être actionné sélectivement pour arrêter l'organe rotatif (50) sur une position choisie parmi une pluralité de positions de rotation prédéterminées.

4. Une suspension pour roue avant selon la revendication 3, dans laquelle l'organe rotatif (50) est une tube creux qui a des trous d'orifices (52, 53, 54) s'étendant dans des directions radiales au travers de celui-ci.

5. Une suspension pour roue avant selon les revendications 3 ou 4, dans laquelle les diamètres des trous d'orifices (52, 53, 54) sont différents les uns des autres.

6. Une suspension pour roue avant selon les revendications 3, 4 ou 5, dans laquelle les trous d'orifices (52, 53, 54) sont disposés le long de la même circonférence selon une relation angulairement espacée à des écartements de 90 degrés environ les uns des autres.

7. Une suspension pour roue avant selon les revendications 3, 4, 5 ou 6, dans laquelle il y a trois trous d'orifice (52, 53, 54).

8. Une suspension pour roue avant selon l'une quelconque des revendications 3 à 7, dans laquelle la bille (58) du mécanisme d'arrêt (56) s'engage dans l'organe rotatif (50) lorsqu'elle est pressée contre celui-ci; dans laquelle le boulon de réglage (57) est monté de façon à permettre un réglage vers l'avant et vers l'arrière; et dans laquelle un organe élastique (59) est intercalé entre le boulon (57) et la bille (58).

9. Une suspension pour roue avant selon la revendication 8, dans laquelle la bille (58) est placée de façon à s'engager dans les trous d'orifices (52, 53, 54).

10. Une suspension pour roue avant selon la revendication 9, dans laquelle l'organe rotatif (50) présente également un évidement placé de façon à permettre l'engagement avec la bille (58).

# FIG. 1

FIG. 2

FIG. 3

FIG. 4

FIG. 5

FIG. 6

# FIG. 7

# FIG. 8

# FIG. 9

# FIG. 10

# FIG. 11